# EUROPÄISCHE PATENTANMELDUNG

(11) **EP 0 577 934 A1**
(43) Veröffentlichungstag der Anmeldung: **12.01.1994**
(21) Anmeldenummer: 93106110.5
(22) Anmeldetag: 15.04.1993
(51) Int. Cl.: B23Q 1/18

(54) **Auf einem Profilrohr geführter Führungsschlitten**

(30) Priorität: 04.07.1992 DE 4222029
(71) Anmelder: RK ROSE + KRIEGER GmbH & Co. KG, D-32438 Porta Westfalica (DE)
(72) Erfinder: Lampert, Rolf, W-4972 Löhne 1 (DE); Schunke, Kurt, W-4950 Minden (DE)
(74) Vertreter: Stracke, Alexander, Dipl.-Ing.

(57) **Zusammenfassung**

2.1 Bei bekannten Führungsschlitten, die mittels an Führungsleisten anliegenden Führungsrollen hin und her bewegbar sind, kommt es beim Einstellen der Führungsrollen zu Verbiegungen bzw. Verspannungen des Führungsschlittens, die zu einer einen einwandfreien Betrieb behindernden Klemmwirkung führen. Aufgabe der Erfindung ist es, unabhängig von der Einstellung der Führungsrollen einen ständig einwandfreien Lauf des Führungsschlittens zu garantieren.

2.2 Dazu ist vorgesehen, daß der Führungsschlitten (1) mit einer mittig angeordneten, in Längsachsrichtung verlaufenden, an beiden Stirnseiten offenen Kammer (9) versehen ist, in der eine Halterung (7) festgelegt ist, die einen Zahnriemen (8) hält, mit der der Führungsschlitten (1) auf dem Profilrohr (2) hin und her bewegbar ist.

2.3 Eine Verbiegung des Führungsschlittens ist nunmehr ausgeschlossen, so daß in jedem Fall eine einwandfreie Funktionsfähigkeit gewährleistet ist.

## Beschreibung

Die vorliegende Erfindung betrifft einen auf einem Profilrohr geführten Führungsschlitten, der durch einen in einer Halterung festgelegten antreibbaren Zahnriemen hin und her bewegbar ist, wobei die Halterung am Führungsschlitten befestigt ist und wobei dieser Stützrollen aufweist, die an führungsleisten des Profilrohres anliegen.

Derartige Führungsschlitten dienen beispielsweise dem Verfahren von Maschinenteilen, wobei die Verfahrstrecke sehr genau einstellbar sein muß.

Bei den bekannten Führungsschlitten wird die den Zahnriemen haltende Halterung unterseitig, also auf der dem Profilrohr zugewandten Seite festgelegt, z.B. verschraubt.

Für eine genaue Verfahrbarkeit des Führungsschlittens ist unabdingbar, daß u.a. ein seitliches Spiel vermieden wird.
Zu diesem Zweck sind die Führungsrollen, die an den Führungsleisten des Profilrohres anliegen, mittels Exzenterverschraubungen so verstellbar, daß sie spielfrei an den Führungsleisten anliegen und dadurch eine exakte Führung möglich ist.

Probleme ergeben sich allerdings bei der Einstellung der Führungsrollen, insbesondere dann, wenn die Führungsleisten im Querschnitt etwa dreieckförmig ausgebildet sind und ein Teil der Führungsrollen an den Schrägflächen der Führungsleisten so anliegen, daß die Anpreßkraft in Richtung des Mittenbereiches des Führungsschlittens weist.

Hierbei kann durch den Anpreßdruck beim Spannen der Führungsrollen eine Biegebeanspruchung auf den Führungsschlitten auftreten, die zu dessen Verformung führt.
Auch bei geringen Verformungen, d.h. bei einem geringen Aufbiegen, ist eine exakte Führung, vor allen Dingen aber ein exaktes Befestigen des Maschinenteiles auf dem Führungsschlitten nicht mehr gewährleistet.
Darüber hinaus kann es durchaus zu einem Verklemmen des Führungsschlittens kommen, so daß eine einwandfreie Längsverschiebbarkeit nicht mehr gegeben ist.

Der vorliegenden Erfindung liegt daher die Aufgabe zugrunde, einen Führungsschlitten der gattungsgemäßen Art so zu gestalten, daß unabhängig von der Einstellung der Führungsrollen eine Deformation des Führungsschlittens ausgeschlossen und eine in allen Betriebsstellungen einwandfreie Funktionsfähigkeit des Führungsschlittens gewährleistet ist.

Diese Aufgabe wird nach der Erfindung dadurch gelöst, daß der Führungsschlitten mit einer mittig angeordneten, in Längsachsrichtung verlaufenden, an beiden Stirnseiten offenen Kammer versehen ist, in der die Halterung festgelegt ist.

Durch die konstruktive Ausgestaltung der Erfindung wird nunmehr bei praktisch gleichbleibenden Querschnittsabmessungen eine so hohe Belastungsfähigkeit erreicht, daß eine Deformierung, insbesondere eine Verbiegung des Führungsschlittens im Mittenbereich praktisch ausgeschlossen ist.

Dadurch bedingt ist natürlich auch die Montage des Führungsschlittens bzw. seine paßgenaue Einstellung erheblich vereinfacht, da auf mögliche Verbiegungen, resultierend aus der Einstellung der Führungsrollen mittels Exzenterverschraubungen nicht mehr geachtet werden muß.

Darüber hinaus ergibt sich, daß weder ein Verklemmen des Führungsschlittens möglich ist noch eine ungenaue Positionierung des Maschinenteiles.

Auch wird die Standzeit des Führungsschlittens erhöht, da die bislang auftretenden, ungleichmäßigen, die Führungsrollen bzw. die Führungsleisten einseitig beanspruchenden Belastungen entfallen.

Eine vorteilhafte Ausgestaltung der Erfindung sieht vor, daß der Führungsschlitten aus einem Strangpreßteil, vorzugsweise aus einem Leichtmetall hergestellt ist.
Eine spanabhebende Bearbeitung, in der die Kammer in den Führungsschlitten einbringbar wäre, beispielsweise durch Fräsen, kann dadurch entfallen.

Dies brigt von allen Dingen deshalb Kostenvorteile, weil solche Führungsschlitten in großer Anzahl hergestellt werden.
Prinzipiell sind zur Herstellung des gebrauchsfähigen Führungsschlittens lediglich Bohrungen einzubringen, durch die zum einen Schrauben geführt werden, mit denen die Führungsrollen zu halten sind, und durch die zum andern Schrauben zur Befestigung der Halterungen steckbar sind.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Fig. 1: einen auf ein Profilrohr montierten erfindungsgemäßen Führungsschlitten in einer Vorderansicht,
- Fig. 2: den Führungsschlitten als Einzelteil gleichfalls in einer Vorderansicht.

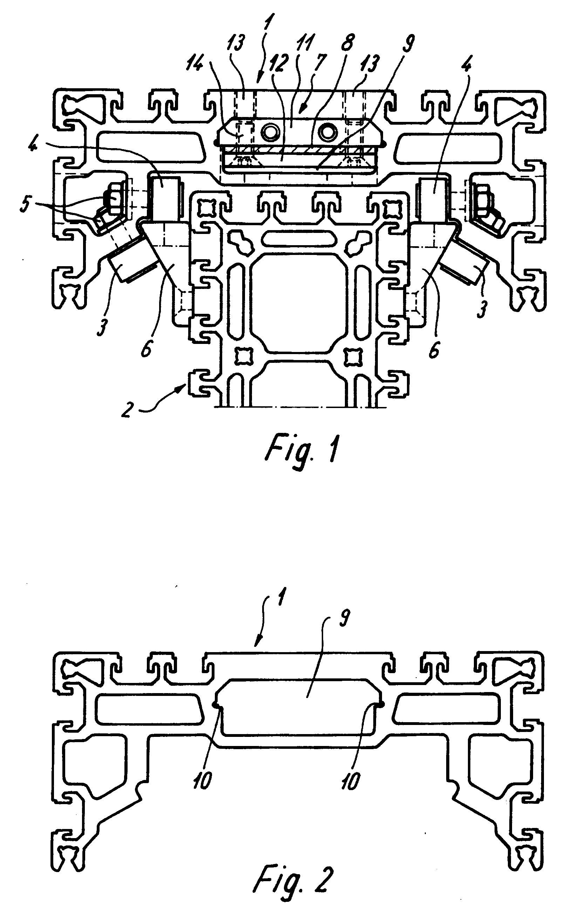

In den Fig. 1 und 2 ist ein Führungsschlitten 1 gezeigt, der entsprechend der Fig. 1 auf einem Profilrohr 2 geführt ist.
Auf der Oberseite, also der dem Profilrohr 2 gegenüberliegenden Seite ist ein nicht dargestelltes Maschinenteil festlegbar, das mittels des Führungsschlittens in Längsachsrichtung des Profilrohres 2 hin und her bewegbar ist.

An den beiden vertikal ausgerichteten Seiten des Profilrohres 2 sind Führungsleisten 6 befestigt, die im Querschnitt etwa dreieckförmig ausgebildet sind, wobei die Verjüngung nach unten hin verläuft.

Sowohl an der Schrägseite jeder Führungsleiste 6 als auch an der oberen parallel zur Führungsschlittens 1 verlaufenden, eine Auflagefläche bildenden Seite liegen Führungsrollen 3, 4 an, die über Gewindebolzen mittels Muttern 5 am Führungsschlitten 1 befestigt sind.

Die an der jeweiligen Schrägseite der Führungsleisten 6 anliegende Führungsrolle 3 ist über eine bekannte Exzenterverschraubung an die Führungsleiste 6 anpreßbar.

Der Führungsschlitten 1 weist eine mittig angeordnete, in Längsachsrichtung sich erstreckende Kammer 9 auf, deren beide Stirnseiten offen sind.

Die Kammer 9 ist im Querschnitt im vorliegenden Ausführungsbeispiel etwa T-förmig ausgebildet, wobei die größere Breitseite im Bereich der Seite angeordnet ist, die die Auflage für das Maschinenteil bildet.

In der Kammer 9 ist eine Halterung 7 befestigt, die in ihrem Querschnitt in etwa dem Querschnitt der Kammer 9 angepaßt ist und aus zwei Platten 11, 12 besteht, wobei die obere Platte im breiteren Kammerteil einliegt.

Zwischen beiden Platten ist ein Zahnriemen 8 festgeklemmt, mit dem der Führungsschlitten antreibbar ist.

Die Halterung 7 ist durch Schrauben 14, die in Gewindebohrungen 13 des Führungsschlittens 1 eingreifen, an diesem befestigt.

Die Kammer 9 weist in ihrem Übergangsbereich von ihrem breiteren zu ihrem schmaleren Teil in Längsachsrichtung verlaufende Staubecken 10 auf, in der sich möglicher anfallender Schmutz sammeln kann, so daß die Montage der Halterung 7 einwandfrei möglich ist.

### Bezugszeichen

- 1: Führungsschlitten
- 2: Profilrohr
- 3: Rohrungsrolle
- 4: Führungsrolle
- 5: Mutter
- 6: Führungsleiste
- 7: Halterung
- 8: Zahnriemen
- 9: Kammer
- 10: Staubecke
- 11: Platte
- 12: Platte
- 13: Gewindebohrung
- 14: Schraube

## Patentansprüche

1. Auf einem Profilrohr geführter Führungsschlitten, der durch einen in einer Halterung festgelegten antreibbaren Zahnriemen hin und her bewegbar ist, wobei die Halterung am Führungsschlitten befestigt ist und wobei dieser Stützrollen aufweist, an Führungsleisten des Profilrohres anliegen, **dadurch gekennzeichnet,** daß der Führungsschlitten (1) mit einer mittig angeordneten, in Längsachsrichtung verlaufenden, an beiden Stirnseiten offenen Kammer versehen ist, in der die Halterung (7) festgelegt ist.

2. Führungsschlitten nach Anspruch 1, dadurch gekennzeichnet, daß die Kammer (9) etwa T-förmig ausgebildet ist, wobei der breitere Bereich den dem Profilrohr (2) abgewandten Bereich bildet.

3. Führungsschlitten nach Anspruch 2, dadurch gekennzeichnet, daß im Übergangsbereich zwischen dem breiteren und dem schmaleren Bereich jeweils eine, sich in Längsachsrichtung erstreckende Staubecke (10) vorgesehen ist.

4. Führungsschlitten nach Anspruch 1, dadurch gekennzeichnet, daß dieser aus einem Strangpreßprofil, vorzugsweise aus Leichtmetall besteht.
